# EUROPÄISCHE PATENTSCHRIFT

(11) **EP 0 640 431 B1**
(45) Veröffentlichungstag und Bekanntmachung des Hinweises auf die Patenterteilung: **21.07.2004**
(21) Anmeldenummer: 94202107.2
(22) Anmeldetag: 19.07.1994
(51) Int. Cl.: B23K 26/12, B23K 35/38

(54) **Verfahren zum Laserschweissen von ALuminium unter einem Schutzgas**
Process for laser welding of aluminium under a shielding gas
Procédé pour le soudage au laser d'aluminium sous un gaz de protection

(30) Priorität: 30.08.1993 DE 4329127
(43) Veröffentlichungstag der Anmeldung: 01.03.1995
(73) Patentinhaber: Messer Griesheim GmbH, 65933 Frankfurt am Main (DE)
(72) Erfinder: Farwer, Alfward, Dr., D-40668 Meerbusch (DE)

(56) Entgegenhaltungen:
- EP-A- 0 350 942
- EP-A- 0 458 181
- EP-A- 0 475 030
- DE-A- 4 020 153
- DE-A- 4 118 791
- US-A- 5 210 388

## Beschreibung

Die Erfindung betrifft ein Verfahren zum Laserschweißen von Aluminium nach dem Oberbegriff des Anspruches 1. Ein solchen Verfahren wird in EP 350942 A beschrieben.

Beim Laserschweißen von Aluminium werden Argon, Helium und deren Gemische als Schutzgase eingesetzt.

Die Verwendung von reinem Stickstoff wird z. T. auch versucht, Probleme bereiten jedoch schlechte Gütewerte infolge von Nitridbildung.

Insgesamt steckt die Laser-Schweißtechnik von Aluminium noch in den Anfängen, und das Nahtaussehen ist häufig wenig befriedigend im Vergleich zur Stahlschweißung.

Der Erfindung liegt die Aufgabe zugrunde, ein Verfahren zum Laserschweißen von Aluminium unter einem Schutzgas auf der Basis von Argon, Helium oder Argon-Helium-Gemischen zu schaffen, welches durch Zugabe einer weiteren Komponente zu einer deutlichen Verbesserung des Schweißverhaltens führt, ohne daß es zu metallurgisch nachteiligen Effekten kommt.

Ausgehend von dem im Oberbegriff des Anspruches 1 berücksichtigten Stand der Technik ist die Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Basisgemische mit 50 bis 70 % Heliumanteil haben sich als besonders günstig erwiesen. Aber auch bei reinem Argon ergeben sich vorteilhafte Effekte. Unter 80 vpm ist kein Effekt mehr zu beobachten. Oberhalb 250 vpm kann sich ein verschlechtertes Nahtaussehen ergeben, wenn auch das Schweißverhalten verglichen mit einem zumischungsfreien Schutzgas immer noch etwas günstiger ist. Auch besteht zunehmend die Gefahr verschlechterter Nahtgütewerte.

## Patentansprüche

1. Verfahren zum Laserschweißen von Aluminium unter einem Schutzgas aus Argon, Helium oder Argon-Helium-Gemischen,
**dadurch gekennzeichnet,**
**daß** dem Schutzgas 80 vpm bis 250 vpm N₂, N₂O oder N₂-N₂O-Gemisch beigefügt sind.

2. Verfahren nach Anspruch 1,
**dadurch gekennzeichnet,**
**daß** dem Schutzgas 120 vpm bis 180 vpm N₂, N₂O oder N₂-N₂O-Gemisch beigefügt sind.

3. Verfahren nach Anspruch 2,
**dadurch gekennzeichnet,**
**daß** dem Schutzgas 150 vpm N₂, N₂O oder N₂-N₂O-Gemisch beigefügt sind.

## Claims

1. Method for the laser welding of aluminium under an inert gas comprising argon, helium or argon/helium mixtures, **characterized in that** 80 vpm to 250 vpm N₂, N₂O or an N₂/N₂O mixture are added to the inert gas.

2. Method according to Claim 1, **characterized in that** 120 vpm to 180 vpm N₂, N₂O or an N₂/N₂O mixture are added to the inert gas.

3. Method according to Claim 2, **characterized in that** 150 vpm N₂, N₂O or an N₂/N₂O mixture are added to the inert gas.

## Revendications

1. Procédé de soudure au laser de l'aluminium sous gaz protecteur à base d'argon, d'hélium ou de mélanges argon-hélium,
**caractérisé en ce qu'**
on ajoute au gaz protecteur de 80 vpm à 250 vpm de N₂, de N₂O ou de mélange N₂/N₂O.

2. Procédé selon la revendication 1,
**caractérisé en ce qu'**
on ajoute au gaz protecteur de 120 vpm à 180 vpm de N₂, de N₂O ou de mélange N₂/N₂O.

3. Procédé selon la revendication 2,
**caractérisé en ce qu'**
on ajoute au gaz protecteur, 150 vpm de N₂, de N₂O ou de mélange N₂/N₂O.
